# EUROPÄISCHE PATENTSCHRIFT

(11) **EP 2 656 968 B1**
(45) Veröffentlichungstag und Bekanntmachung des Hinweises auf die Patenterteilung: **13.02.2019**
(21) Anmeldenummer: 13163055.0
(22) Anmeldetag: 10.04.2013
(51) Int. Cl.: A47L 7/00, B23Q 11/00, A47L 9/02

(54) **Saugvorsatz für einen Staubsauger oder Staubsauger mit einem Saugvorsatz sowie Akku-Staubsauger**
Suction head for a vacuum cleaner or vacuum cleaner with a suction head and battery-powered vacuum cleaner
Embout d'aspiration pour un aspirateur ou aspirateur avec un embout d'aspiration et aspirateur à batterie

(30) Priorität: 24.04.2012 DE 102012103580; 18.03.2013 DE 102013102726
(43) Veröffentlichungstag der Anmeldung: 30.10.2013
(73) Patentinhaber: Vorwerk & Co. Interholding GmbH, 42275 Wuppertal (DE)
(72) Erfinder: Zabback, Iris, 42289 Wuppertal (DE); Koch, Markus, 42555 Velbert (DE); Zachos, Alexandros, 45131 Essen (DE)
(74) Vertreter: Müller, Enno

(56) Entgegenhaltungen:
- EP-A1- 0 681 889
- GB-A- 2 005 403
- GB-A- 2 262 159

## Beschreibung

Die Erfindung betrifft einen Saugvorsatz für einen Staubsauger nach den Merkmalen des Oberbegriffs des Anspruches 1.

Saugvorsätze für einen Staubsauger sowie Staubsauger mit einem Saugvorsatz der in Rede stehenden Art sind bekannt. Ein derartiger Saugvorsatz ist beispielsweise in der DE 195 43 599 A1 dargestellt und beschrieben. Der Saugvorsatz ist hierbei derart ausgelegt, dass dieser geeignet ist, zur Saugbefestigung an einer Fläche, beispielsweise an einer senkrechten Wandfläche, um beispielsweise bei einem Bohrvorgang an der Fläche anfallenden Bohrstaub unmittelbar über den zugeordneten Saugmund des Saugvorsatzes abzusaugen. Der sowohl zur Absaugung als auch zur Anhaftung des Saugvorsatzes an der Fläche dienende Saugluftstrom beziehungsweise Unterdruck wird bevorzugt über einen an dem Saugvorsatz angeschlossenen Staubsauger, insbesondere elektromotorisch angetriebenen Haushalts-Staubsauger aufgebracht, weiter bevorzugt über einen an das Haushaltsnetz angeschlossenen Staubsauger.

Aus der EP 681 889 A1 ist ein Saugvorsatz für einen Staubsauger bekannt, bei welchem der Saugmund ständig an den Unterdruck des Staubsaugers angekoppelt ist. Der Saugvorsatz bei willentlicher Betätigung eines Absperrventils in einer zu dem Saugmund führenden Leitung von dem Unterdruck entlastet werden, um ein Abnehmen des Saugvorsatzes von einer Fläche zu ermöglichen.

Ausgehend von dem dargelegten Stand der Technik beschäftigt sich die Erfindung mit der Aufgabenstellung, einen Saugvorsatz für einen Staubsauger sowie einen entsprechend ausgebildeten Staubsauger anzugeben, der ein vorteilhaftes Arbeiten ermöglicht.

Diese Aufgabe ist beim Gegenstand des Anspruches 1 hinsichtlich des Saugvorsatzes gelöst, wobei darauf abgestellt ist, dass sich bei einer Saugbefestigung an einer Fläche selbsttätig die Abkopplung des Saugmundes ergibt. Hinsichtlich des Staubsaugers ist die Aufgabe beim Gegenstand des Anspruches 9 gelöst, wobei darauf abgestellt ist, dass der Staubsauger einen Saugvorsatz in der beschriebenen Weise aufweist und der langgestreckt ausgebildete Staubsauger an seinem einen Endbereich eine Saugleitungsmündung aufweist und an dem anderen Ende eine gegenüber dem mittleren Bereich verjüngten Handhabungsstiel.

Es ist eine durch den Benutzer nicht beeinflussbare Abkopplung des Unterdrucks im Saugmund herbeiführbar. Diese ergibt sich selbsttätig, bevorzugt in dem Moment, in dem bei aktivierter Saugluftströmung der Saugvorsatz, gegebenenfalls zusammen mit einem hieran angeschlossenen Akku-Staubsauger, an eine Fläche zur Anhaftung an derselben angesetzt wird. Entsprechend ist so einer Fehlbedienung durch den Benutzer entgegengewirkt. Weiter bevorzugt ergibt sich bei insbesondere durch den Benutzer herbeigeführter Abnahme des Saugvorsatzes von der Fläche selbsttätig eine Ankopplung des Saugmundes an dem durch den Staubsauger erzeugten Unterdruck. In dieser Stellung ist in einer Ausgestaltung eine Unterdruckbeaufschlagung sowohl des gesonderten Ansaugbereiches als auch des Saugmundes erreicht. Weiter bevorzugt ist in der von der Fläche abgehobenen Stellung die Saugluft allein durch den Saugmund geführt.

Im Falle der Abkopplung von dem durch den Staubsauger erzeugten Unterdruck ist eine entsprechend verbesserte Ansaughaftung des Saugvorsatzes an der Fläche gegeben. Insbesondere bei nicht glattflächigen, d.h. weiter insbesondere bei grobstrukturierten Oberflächen, an welchen der Saugvorsatz mittels Unterdruck anhaften soll, ist durch eine entsprechende Erhöhung des Unterdruckes infolge der Abkopplung des Saugmundes von der Saugluftströmung eine sichere Anhaftung des Saugvorsatzes an der Fläche, beispielsweise Wandfläche erreichbar, dies bei gleichbleibender Leistung des Saugluftgebläses. Darüber hinaus ist zufolge dieser Ausgestaltung auch die Nutzung eines solchen Saugvorsatzes bei gegenüber üblichen Haushalts-Staubsaugern leistungsschwächeren Sauggebläsen einsetzbar, da der hierüber erzeugte Unterdruck des Saugvorsatzes (zunächst) allein zur Saug-Anhaftung des Saugvorsatzes an der Fläche genutzt wird.

Der Staubsauger kann ein Akku-Staubsauger mit einer an die Leistungsfähigkeit des Akkumulators angepassten Antriebsleistung sein. Derartige akkumulatorbetriebene Staubsauger sind bekannt, so beispielsweise mit einer Antriebsleistung von 30 bis 70 Watt und mehr bis hin zu mehreren hundert Watt. Diese dienen insbesondere im Haushaltsbereich der Überboden-Saugreinigung von Flächen, beispielsweise Tischflächen. Der Staubsauger weist hierbei einen Saugmund auf, wie er vor- oder nachstehend beschrieben ist. Die über die Saugluftströmung im Betrieb des Staubsaugers transportierten Schmutz- und Staubpartikel werden bevorzugt in einer Staubsammelkammer oder in einem Staubfilterbeutel abgeschieden.

Bei dem Akku-Staubsauger kann ein Bohrstaub-Absaugvorsatz und eine Haft-Saugkammer vorgesehen sein, wobei der Akku-Staubsauger an dem Bohrstaub-Absaugvorsatz und der Haft-Saugkammer mittels einer Saugleitungs-Steckverbindung und einer weiteren Halterungs-Klemmverbindung und/ oder Halterungs-Formschlussverbindung halterbar ist. Zufolge dieser Ausgestaltung ist ein Akku-Staubsauger mit erweiterter Nutzung angegeben. Der Akku-Staubsauger ist entsprechend bevorzugt neben der üblichen Nutzung zum Absaugen von beispielsweise Flächen auch nutzbar zum Absaugen von während eines Bohrvorganges beispielsweise an einer Wandfläche anfallenden Bohrstaubes.

Hierzu ist der Akku-Staubsauger mit dem Bohrstaub-Absaugvorsatz versehen, welcher Vorsatz bevorzugt über eine Saugleitungs-Steckverbindung und einer weiteren Halterungsverbindung an dem Absaugvorsatz bei Bedarf gehaltert ist. Der Absaugvorsatz weist bevorzugt die Haft-Saugkammer auf, zur Saug-Anhaftung des Absaugvorsatzes sowie des hiermit verbundenen Akku-Staubsaugers an einer Fläche, beispielsweise einer Wandfläche, dies weiter bevorzugt im unmittelbaren Bereich einer durchzuführenden Bohrung. Die Haft-Saugkammer ist über das Sauggebläse des Akku-Staubsaugers unterdruckbeaufschlagbar, dies weiter insbesondere zufolge der Saugleitungs-Steckverbindung mit dem Staubsauger. Bei eingeschaltetem Akku-Staubsauger, d.h. bei eingeschaltetem Gebläse, ist der mit dem Absaugvorsatz versehene Staubsauger über die Haft-Saugkammer bevorzugt auch an senkrechten Wandflächen oder dergleichen anhaftbar. Es bedarf entsprechend nicht des Festhaltens des Akku-Staubsaugers durch den Benutzer. Vielmehr hat der Benutzer hierbei bevorzugt beide Hände frei zur Durchführung beispielsweise einer Bohrung. Über die Haft-Saugkammer und dem im Betrieb in diesem Bereich herrschenden Unterdruck wird zufolge Nutzung des Akku-Staubsaugers lediglich dieser zusammen mit dem Bohrstaub-Absaugvorsatz getragen. Es entfällt, wie bei üblichen, kabelgebundenen Haushalts-Staubsaugern, ein zu dem Absaugvorsatz führender Saugschlauch oder dergleichen, welcher nachteilig auf die Unterdruck-Anhaftung einwirken kann. Auch ist zufolge der vorgeschlagenen Lösung der Rüstaufwand wesentlich verringert. Es wird zur Aufnahme von während eines Bohrvorganges anfallenden Bohrstaubes kein schwerer und Platz einnehmender Staubsauger mit Kabel benötigt, darüber hinaus keine externe Stromversorgung. Eine Schlauchmontage, Demontage anderer Vorsatzgeräte zur Anordnung eines Absaugvorsatzes entfällt bei der vorgeschlagenen Lösung. Vielmehr wird hier ein üblicher, leichter und einhandbedienbarer Staubsauger benutzt der akkumulatorbetrieben ist.

Der Bohrstaub-Absaugvorsatz ist mit einem Saugmund versehen, welcher Saugmund weiter von einem, von dem Akku-Staubsauger erzeugten Unterdruck abkoppelbar ist. Im Falle der Abkopplung von dem durch den Akku-Staubsauger erzeugten Unterdruck ist eine entsprechend verbesserte Ansaughaftung des Saugvorsatzes an der Fläche gegeben. Insbesondere bei nicht glattflächigen, d.h. weiter insbesondere bei grobstrukturierten Oberflächen, an welchen der Saugvorsatz zusammen mit dem Akku-Staubsauger mittels Unterdruck anhaften soll, ist durch eine entsprechende Erhöhung des Unterdruckes in der Haft-Saugkammer infolge der Abkopplung des Saugmundes von der Saugluftströmung eine sichere Anhaftung der genannten Kombination an der Fläche, beispielsweise Wandfläche erreichbar. Zufolge dieser Ausgestaltung ist die Nutzung eines solchen Saugvorsatzes auch bei gegenüber üblichen Haushalts-Staubsaugern leistungsschwächeren Akku-Sauggebläsen mit einer Aufnahmeleistung von 30 bis 70 Watt einsetzbar, da der hierüber erzeugte Unterdruck in einer bevorzugten Stellung des Saugvorsatzes allein zur Saug-Anhaftung des Saugvorsatzes zusammen mit dem Akku-Staubsauger an der Fläche genutzt wird.

In bevorzugter Ausgestaltung ist die Abkopplung durch eine zwischen einer Abkopplungsstellung und einer Zuschaltstellung verschwenkbare Verschlussklappe in einem Saugleitungsabschnitt gegeben. Diese Verschlussklappe verschwenkt selbsttätig mit Ansetzen des Saugvorsatzes an die Fläche beziehungsweise mit Abheben des Saugvorsatzes von der Fläche. Diesbezüglich ist auch eine manuelle Verschwenkung der Verschlussklappe unmittelbar durch den Bediener oder mittelbar über einen durch den Bediener zu aktivierenden Aktor ermöglicht.

Die Verschlussklappe ist hierbei weiter bevorzugt so ausgestaltet, dass diese in der Saugbefestigungsstellung des Saugvorsatzes an einer Fläche den Saugmund beziehungsweise den zum Saugmund führenden Saugkanal bevorzugt vollständig, weiter bevorzugt zumindest zu mehr als 80 Prozent verschließt.

Die Verschlussklappe ist weiter bevorzugt in die Zuschaltstellung des Saugmundes vorgespannt. Entsprechend ergibt sich eine Grundausrichtung der Verschlussklappe, in welcher bei eingeschaltetem Staubsauger die Saugluftströmung zumindest durch den Saugmund geführt ist. Aus dieser vorgespannten Grundstellung der Verschlussklappe ist diese mit Ansetzen des Saugvorsatzes an einer Fläche und/ oder zufolge Benutzereingriff schwenkbar in eine Abkopplungsstellung des Saugmundes.

Die Vorspannung auf die Verschlussklappe ist weiter bevorzugt durch eine auf die Verschlussklappe einwirkende Feder gegeben, beispielsweise eine Druckfeder oder eine Schenkelfeder. Alternativ ist die Federeinwirkung gegeben durch eine entsprechende Materialwahl der Verschlussklappe, insbesondere des die Verschwenkbarkeit gebenden Scharnierbereiches.

In weiter bevorzugter Ausgestaltung ist vorgesehen, dass der Saugmund eine zu dem Saugleitungsabschnitt führende Strömungsöffnung aufweist, wobei sich an die Strömungsöffnung zunächst eine im Hinblick auf einen sich an die Strömungsöffnung in Strömungsrichtung anschließenden Adapterabschnitt zur Zusammenwirkung mit einem Saugleitungsabschnitt des Staubsaugers eine gegenüber dem Adapterabschnitt querschnittsvergrößerte Sammelkammer anschließt. Der bevorzugt an dem Bohrstaub-Absaugvorsatz vorgesehene, im Wesentlichen in der Strömungsöffnung des Saugmundes mündende Adapterabschnitt dient in Zuordnungsstellung des Staubsaugers zum Saugvorsatz bevorzugt dem strömungsdichten Anschluss des Saugmundes an dem Staubsauger. Weiter bevorzugt wirkt hierbei der Adapterabschnitt mit dem zur üblichen Flächenabsaugung mittels des Staubsaugers dienenden Saugmund desselben. Die Strömungsöffnung des Adapterabschnittes im Bereich des Saugmundes mündet bevorzugt in einer gegenüber dem Adapterabschnitt querschnittsvergrößerten Sammelkammer, insbesondere für im Zuge eines Bohrvorganges anfallenden Bohrstaub. Die Sammelkammer ist hierbei weiter bevorzugt hinsichtlich ihres Aufnahmevolumens so ausgelegt, dass Bohrstaub beziehungsweise Bohrausbruch im Zuge eines üblichen Bohrvorganges mengenmäßig aufgenommen werden kann. Auch ist diesbezüglich bevorzugt, dass die Sammelkammer sich mit Bezug auf die Strömungsöffnung beziehungsweise auf den Adapterabschnitt sowohl senkrecht zu einer Luftströmungsrichtung im Betrieb des Staubsaugers als auch quer dazu über die Querschnittsfläche des Adapterabschnitts hinaus erstreckt.

In weiter bevorzugter Ausgestaltung ist die Sammelkammer schalenartig erweitert, womit in vorteilhafter Weise auch im Zuge des Bohrvorganges gegebenenfalls abgesprengte Partikel, beispielsweise Steinpartikel, aufgefangen werden können.

In weiter bevorzugter Ausgestaltung ist die Verschlussklappe in der Sammelkammer angeordnet, weiter entsprechend bevorzugt in einem Bereich zwischen der dem Saugmund zugeordneten Strömungsöffnung und der in Zuordnungsstellung dem Saugleitungsabschnitt des Staubsaugers zugeordneten Öffnung des Adapterabschnittes. In weiter bevorzugter Ausgestaltung stellt die Verschlussklappe in der Verschlussstellung zumindest einen Teilabschnitt eines Bodenbereiches der Sammelkammer.

Bevorzugt durchsetzt ein an der Verschlussklappe befestigter Hebel den Adapterabschnitt nach außen, weiter bevorzugt in Richtung auf den Ansaugbereich. In der bevorzugt vorgespannten Zuschaltstellung der Verschlussklappe überragt dieser auf die Verschlussklappe einwirkende Hebel bevorzugt die Aufsatzebene des Ansaugbereiches, womit mit Ansetzen des Ansaugbereiches an eine Fläche zufolge entsprechender Beaufschlagung des Hebels eine Verlagerung der Verschlussklappe in die den Saugmund abkoppelnde Stellung erreicht wird.

Der Saugmund ist in bevorzugter Ausgestaltung einteilig mit dem Ansaugbereich ausgebildet, weiter bevorzugt einteilig im Kunststoff-Spritzverfahren hergestellt. Dies bietet eine günstige Handhabung, insbesondere zum Ansetzen des Saugvorsatzes an dem Staubsauger, insbesondere Akku-Staubsauger.

Insbesondere der Ansaugbereich des Saugvorsatzes ist bevorzugt als langgestrecktes Flächenteil ausgebildet, das jedenfalls die Breite des damit zu verbindenden Staubsaugers, insbesondere Akku-Staubsaugers, übertrifft. Die in Ansatzstellung der Fläche, beispielsweise Wandfläche zugewandte Öffnungsfläche des Ansaugbereiches beträgt in bevorzugter Ausgestaltung 150 bis 600 cm², weiter bevorzugt 200 bis 300 cm².

An dem Saugvorsatz ist weiter bevorzugt ein Formschluss-Halterungsteil ausgebildet, zum Eingriff in eine Halterungsöffnung des Staubsaugers, insbesondere des Akku-Staubsaugers. Das Formschluss-Halterungsteil ist hierbei bevorzugt einstückig, weiter bevorzugt materialeinheitlich insbesondere mit dem Ansaugbereich, darüber hinaus weiter bevorzugt auch mit dem Saugmund ausgebildet. Die staubsaugerseitige Halterungsöffnung ist zur entsprechenden Aufnahme des Formschluss-Halterungsteiles ausgebildet, beispielsweise in Form einer von dem Halterungsteil zu durchsetzenden Öffnung.

So ist in einer weiter bevorzugten Ausgestaltung vorgesehen, dass der langgestreckt ausgebildete Staubsauger an seinem einen Endbereich eine Saugleitungsmündung aufweist und an dem anderen einen gegenüber dem mittleren Bereich verjüngten Handhabungsstiel. Dieser Handhabungsstiel dient insbesondere bei Ausgestaltung des Staubsaugers als handgeführter Akku-Staubsauger zum Ergreifen und Handhaben desselben, weiter insbesondere zur Führung des Staubsaugers im Zuge einer Absaugung von beispielsweise Oberflächen über die Saugleitungsmündung. Der Handhabungsstiel ist hierbei insbesondere mit Bezug auf den Querschnitt handhabungsgünstig geformt, so dass dieser von einer Hand umgriffen werden kann. Der gegenüber dem Handhabungsstiel verdickte mittlere Bereich nimmt in bevorzugter Ausgestaltung insbesondere den Sauggebläsemotor, darüber hinaus weiter bevorzugt auch die Staubsammelkammer oder den Filterbeutel auf.

Der Handhabungsstiel weist bevorzugt eine Formschluss-Halterungsöffnung auf, so weiter insbesondere in Form einer fensterartigen Durchbrechung. Diese Halterungsöffnung kann in einer Ausgestaltung zum Aufhängen des Akku-Staubsaugers bei Nichtbenutzung desselben dienen. Im Zusammenhang mit der Anordnung eines vorbeschriebenen Saugvorsatzes an dem Akku-Staubsauger wird die Formschluss-Halterungsöffnung bevorzugt durchsetzt von einem Formschluss-Halterungsteil des Saugvorsatzes. Anderendig ist in dieser Stellung eine Zusammenwirkung von staubsaugerseitigem Saugleitungsabschnitt beziehungsweise Saugleitungsmündung und dem saugvorsatzseitigen Adapterabschnitt gegeben.

Eine weiter bevorzugte Ausgestaltung sieht vor, dass der Saugvorsatz eine Klemm-Halterungsausbildung zur Klemmhalterung des Staubsaugers aufweist. Diese Klemmhalterung kann alternativ zu der vorbeschriebenen Formschlusshalterung vorgesehen sein. Bevorzugt wird eine Kombination aus einer Formschlusshalterung, insbesondere im Bereich des Handhabungsstiels und einer Klemmhalterung.

Die Klemmhalterelemente des Saugvorsatzes wirken bevorzugt mit dem Gehäuse des zuzuordnenden Staubsaugers zusammen, so weiter bevorzugt zufolge klemmender Umgreifung von Umfangsabschnitten des Staubsaugers. Die Klemm-Halterungsausbildungen sind hierbei weiter bevorzugt federnd ausgebildet, mit einer in Richtung auf die Klemmhalterung wirkenden Vorspannung. In vorteilhafter Weise sind die Klemm-Halterungsausbildungen des Saugvorsatzes einstückig und weiter bevorzugt materialeinheitlich mit dem Saugvorsatz ausgebildet.

Die Klemm-Halterungsausbildung ist in bevorzugter Ausgestaltung einem Bereich zwischen Saugleitungsmündung und Formschluss-Halterungsöffnung des Staubsaugers zuordbar. So ist weiter bevorzugt eine Klemmhalterung insbesondere in dem gegenüber dem Handhabungsstiel verdickten mittleren Bereich des Staubsaugergehäuses vorgesehen.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, ggf. also auch dimensionslos, insbesondere 1,01-Fach etc. einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich ein Ausführungsbeispiel darstellt. Auf der Zeichnung zeigt:
- Fig. 1: in perspektivischer Darstellung einen Staubsauger in Form eines AkkuStaubsaugers mit einem hieran angeschlossenen Saugvorsatz;
- Fig. 2: die Draufsicht hierzu;

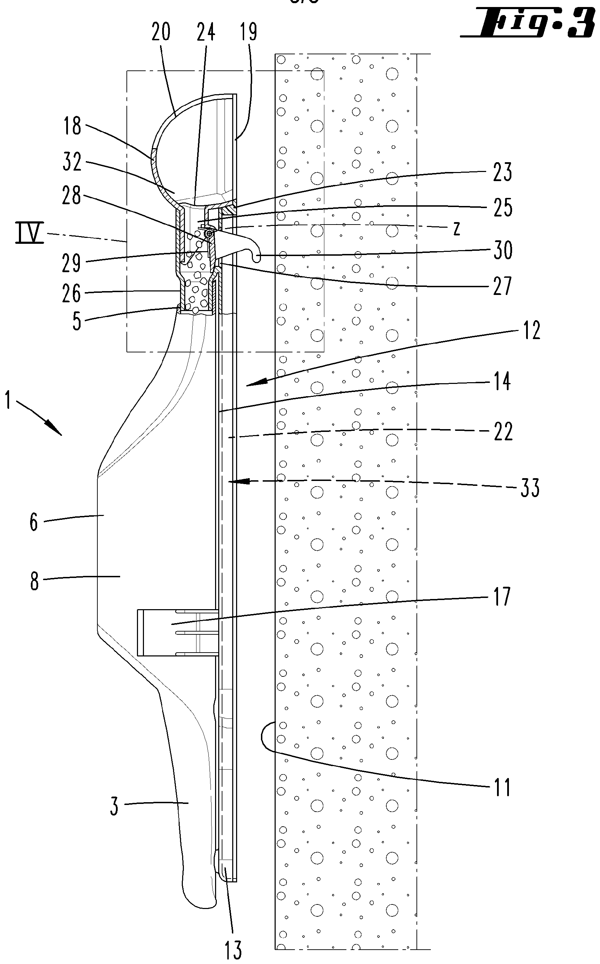

- Fig. 3: den Schnitt gemäß der Linie III-III in Fig. 2, im Zuge eines Ansetzens des mit dem Staubsauger versehenen Saugvorsatzes an eine Fläche, beispielsweise Wandfläche;

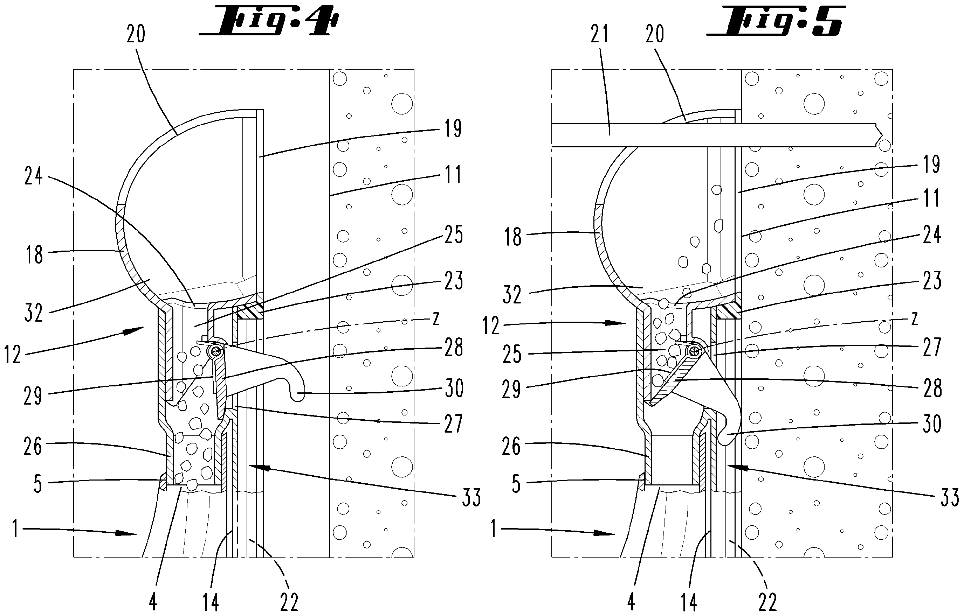

- Fig. 4: die Herausvergrößerung des Bereiches IV in Fig. 3;
- Fig. 5: eine der Fig. 4 entsprechende Darstellung bei an der Fläche angesetztem Saugvorsatz und in Betrieb genommenem Staubsauger;
- Fig. 6: den Saugvorsatz in einer perspektivischen Einzeldarstellung;

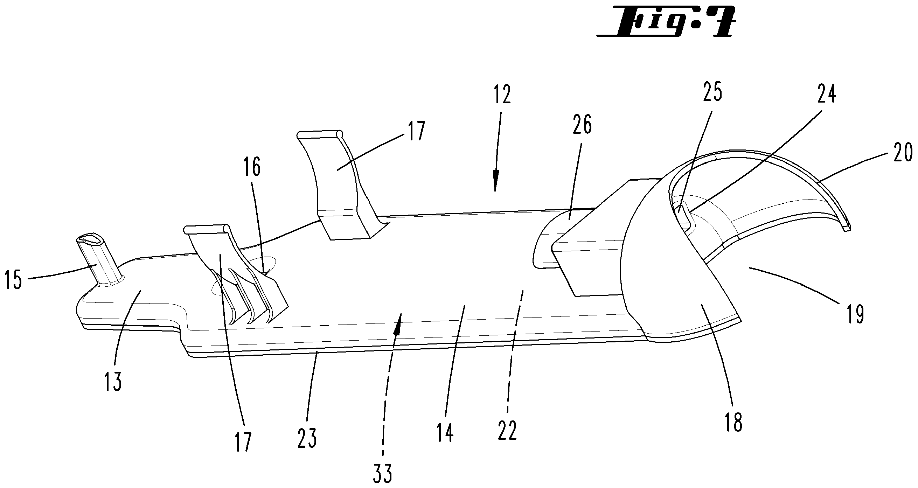

- Fig. 7: in einer weiteren perspektivischen Einzeldarstellung den Saugvorsatz.

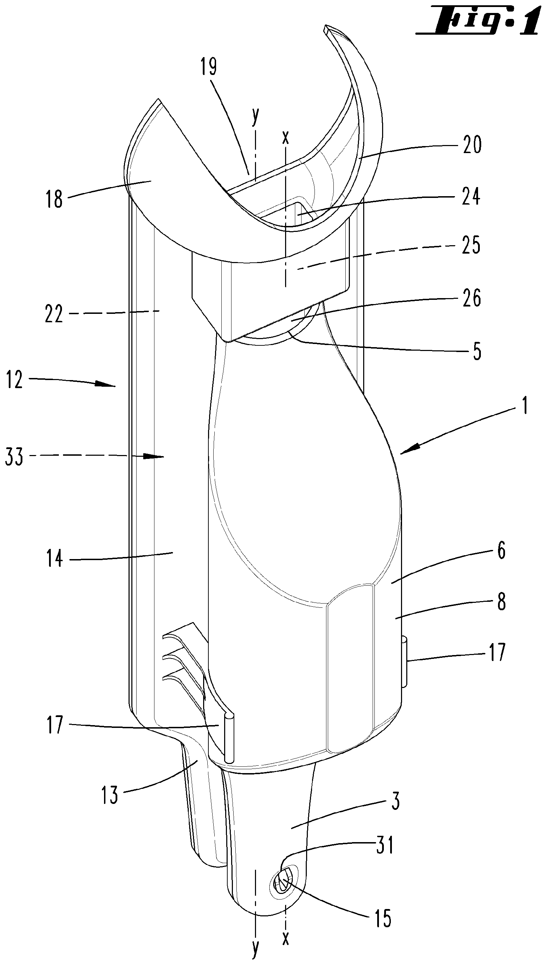

Dargestellt und beschrieben ist zunächst mit Bezug zu Fig. 1 ein Staubsauger 1 in Form eines einhändig zu bedienenden, akkumulator-betriebenen Handstaubsaugers.

Der Staubsauger 1 weist zum Aufbau einer Saugluftströmung einen elektrisch betriebenen, weiter bevorzugt über den Akkumulator 10 versorgten Gebläsemotor 2 auf. Zur Handhabung des Staubsaugers 1 ist dieser mit einem griffförmigen Handhabungsstiel 3 versehen. Der Handhabungsstiel 3 ist ausgelegt zum Umgreifen durch eine Hand.

Der Gebläsemotor 2 ist strömungsmäßig angeschlossen an einem in dem Gehäuse 4 des Staubsaugers 1 ausgebildeten Saugleitungsabschnitt 4. Dieser mündet in einem Saugmund 5, welcher gegenüberliegend zu dem Handhabungsstiel 3 ausgeformt ist.

Bei Betrieb des Staubsaugers 1 über den Saugmund 5 mit der Luftströmung eingesaugte Staub- und Schmutzpartikel werden in einer in dem Gehäuse 6 des Staubsaugers 1 vorgesehenen Staubsammelkammer 7 abgeschieden.

Der Staubsauger 1 ist insgesamt langgestreckt ausgebildet, mit einem bevorzugten Längen-/Breitenverhältnis von 2: 1 bis 5 : 1, bevorzugt etwa 3: 1 bis 4:1.

Insbesondere ein in Längserstreckung betrachteter mittlerer Bereich 8 ist hinsichtlich des Gehäuses 6 bevorzugt rotationssymmetrisch ausgebildet. Von diesem ausgehend verjüngt sich das Gehäuse 6 sowohl bevorzugt in Richtung des Saugmundes 5 als auch weiter bevorzugt in Richtung des Handhabungsstiels 3.

Eine den Staubsauger 1 in Längserstreckung mittig durchsetzende Achse ist mit x bezeichnet.

Zum Aktivieren insbesondere des Gebläsemotors 2, d.h. zur Inbetriebnahme des Staubsaugers 1 ist weiter bevorzugt dem Handhabungsstiel 3 zugewandt ein Schalter 9 vorgesehen. Insbesondere zur Staub- und Schmutzaufnahme bei Bohrarbeiten, weiter insbesondere an senkrechten Flächen 11, wie beispielsweise Wandflächen, ist an dem Staubsauger 1, insbesondere Akku-Staubsauger ein Saugvorsatz 12 befestigbar.

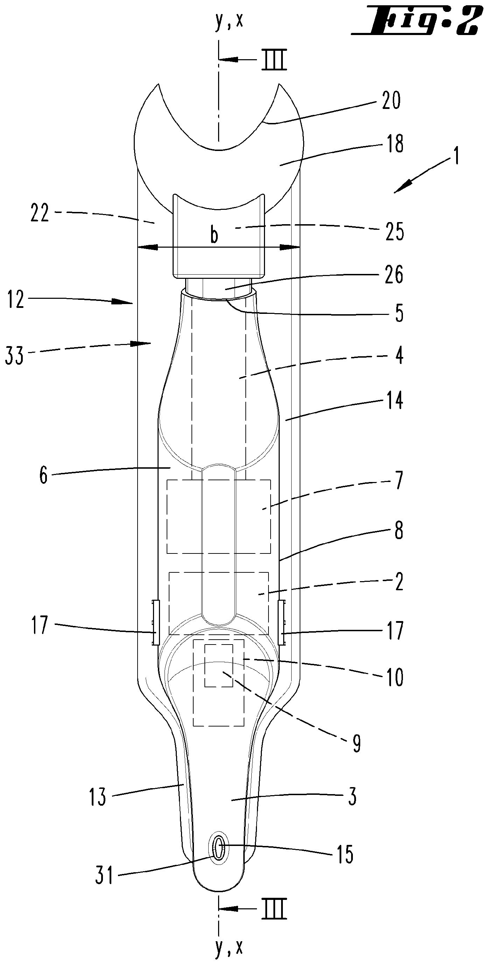

Der Saugvorsatz 12 ist insgesamt als langgestrecktes Bauteil geformt, mit einer Längserstreckung in Richtung der Längserstreckung des an dem Saugvorsatz 12 anzuordnenden Staubsaugers 1. Auch hierbei ist mit Bezug auf eine Draufsicht gemäß Fig. 2 ein Längen-/Breitenverhältnis von bevorzugt 3 : 1 bis 5 : 1, weiter bevorzugt etwa 4 : 1 vorgesehen.

Die quer zur Längserstreckung betrachtete Breite b entspricht bevorzugt dem 1,1- bis 1,5-Fachen, weiter bevorzugt etwa de 1,3-Fachen der in selber Richtung betrachteten Breite des Staubsaugers 1 insbesondere in dessen mittlerem Bereich 8.

Zugeordnet einem Endbereich ist der Saugvorsatz 12 taillenartig verjüngt. Dieser taillenartig verjüngte Bereich 13 ist in Anordnungsstellung an dem Staubsauger 1 zugeordnet dem Handhabungsstiel 3.

Oberseitig ist an dem Bereich 13 ein sich senkrecht aus der im Wesentlichen ebenen Oberfläche 14 des Saugvorsatzes 12 herauswachsendes, zapfenförmiges Formschluss-Halterungsteil 15 angeformt.

Im Übergangsbereich vom schmaleren Endbereich 13 zu dem sich im Wesentlichen über die weitere gesamte Längserstreckung erstreckenden breiteren Bereich des Saugvorsatzes 12 ist dieser von einer bohrungsartigen Öffnung 16 durchsetzt. Diese Öffnung 16 dient beispielsweise zur Aufbewahrung des Saugvorsatzes 12 in hängender Form.

Des Weiteren sind an der Oberfläche 14 zwei gegenüberliegend angeordnete Klemm-Halterungsausbildungen 17 vorgesehen. Diese sind in Breitenrichtung des Saugvorsatzes 12 betrachtet derart beabstandet, dass zwischen diesen das Gehäuse 6 des Staubsaugers 1 im mittleren Bereich 8 klemmend fassbar ist. Entsprechend sind die zugewandten Flächen der Klemm-Halterungsausbildungen 17 mit Bezug auf einen quer zur Längsmittelachse y geführten Vertikalschnitt durch diese nach außen gekrümmt verlaufend ausgebildet. Weiter sind die Klemm-Halterungsausbildungen 17 federnd ausgelegt, mit einer Vorspannung in Richtung auf die Klemmstellung, das heißt mit einer, die Klemm-Halterungsausbildungen 17 aufeinander zu beaufschlagenden Vorspannung.

Dem das Formschluss-Halterungsteil 15 aufweisenden Ende gegenüberliegenden Ende des Saugvorsatzes 12 ist bevorzugt einstückig und materialeinheitlich ein Bohrstaub-Absaugvorsatz 18 zugeordnet. Dieser ist im Wesentlichen insgesamt halbschalenförmig gestaltet, mit einem zur Unterseite, d.h. zu der der Oberfläche 14 abgewandten Seite des Saugvorsatzes 12 weisenden Saugmund 19. Der Ansaugbereich 22 bildet eine Haft-Saugkammer 33 aus. In weiter bevorzugter Ausgestaltung kann auch zumindest ein Teil des Absaugvorsatzes 18 die Haft-Saugkammer 33 (mit-)ausbilden.

Der halbschalenartig den Saugmund 19 zumindest teilweise überdeckende Bohrstaub-Absaugvorsatz 18 weist weiter eine Durchgriffsöffnung 20 auf, zum bevorzugten Durchgriff eines Bohrers 21 im Zuge der Nutzung des Saugvorsatzes 12.

Ebenfalls unterseitig, d.h. der Oberfläche 14 abgewandt, ist an dem Saugvorsatz 12 ein sich bevorzugt nahezu über die gesamte Länge - mit Ausnahme des Saugmundbereiches des Absaugvorsatzes - und der Breite sich erstreckender Ansaugbereich 22 ausgebildet. Dieser ist weiter bevorzugt oberseitig überdeckt durch das Gehäuse und umlaufend umfasst durch einen Dichtungswulst 23. Mit Bezug auf einen Längs-Vertikalschnitt erstrecken sich die Öffnungsebenen des Ansaugbereiches 22 und des Saugmundes 19 bevorzugt in einer gemeinsamen Ebene.

Der Dichtungswulst 23 erstreckt sich zudem auch zugewandt dem Ansaugbereich 22 umlaufend zur Randkante der die Oberfläche 14 durchsetzenden Öffnung.

Der Ansaugbereich 22 und der Saugmund 19 des Bohrstaub-Absaugvorsatzes 18 sind in Längserstreckung des Saugvorsatzes 12 betrachtet hintereinander angeordnet.

In den kuppelartigen Bohrstaub-Absaugvorsatz 18 mündet eine Strömungsöffnung 24, dies bevorzugt in einem im Wesentlichen in Richtung auf die weitere Erstreckung des Ansaugbereiches 22 weisenden kuppelartig überdeckten Bereich außerhalb der Durchgriffsöffnung 20. Weiter bevorzugt mündet die Strömungsöffnung 24 in einem mit Bezug auf die Oberfläche 14 des Saugvorsatzes 12 vertikal zu dem Ansaugbereich 22 beabstandeten Bereich.

Die Strömungsöffnung 24 geht über in einen saugvorsatzseitigen Saugleitungsabschnitt 25. Dieser erstreckt sich bevorzugt parallel ausgerichtet zur Oberfläche 14, weiter bevorzugt mit Bezug auf eine Vertikalprojektion auf die Oberfläche 14 die Längsmittelachse y des Saugvorsatzes 12 aufnehmend.

Der Strömungsöffnung 24 abgewandt geht der Saugleitungsabschnitt 25 über in einen bevorzugt gegenüber dem Saugleitungsabschnitt 25 im Wesentlichen querschnittskleineren Adapterabschnitt 26. Dieser ist insbesondere mit Bezug auf den Querschnitt so ausgelegt, dass dieser zum dichtenden Eingriff in den Saugmund 5 des Staubsaugers 1 geeignet ist.

Ferner weist der Saugleitungsabschnitt 25 des Saugvorsatzes 12 eine die Decke des Ansaugbereiches 22 durchsetzende Ansaugöffnung 27 auf.

Bei über den Adapterabschnitt 26 angeschlossenem und gebläseaktiviertem Staubsauger 1 ist entsprechend durch die Strömungsöffnung 24 eine Saugluftströmung zum Abtransport von Schmutz- und/oder Staubpartikeln ermöglicht, wie auch die Erzeugung einer Luftströmung durch den Ansaugbereich 22 und die Ansaugöffnung 27, darüber hinaus, wie weiter bevorzugt, die Erzeugung eines Unterdruckes im Ansaugbereich bei im Wesentlichen dichtendem Ansetzen des Ansaugbereiches 22 mit seiner Dichtungswulst 23 an einer Fläche 11.

In dem Saugleitungsabschnitt 25 ist eine Verschlussklappe 28 angeordnet. Diese Verschlussklappe ist um eine quer zur Längsmittelachse y ausgerichtete Schwenkachse z schwenkbar gelagert, insbesondere zwischen einer den Saugleitungsabschnitt 25 zur Strömungsöffnung 24 sperrenden und die Ansaugöffnung 27 freigebenden Stellung und einer die Ansaugöffnung 27 zum Ansaugbereich 22 verschließenden und die Strömungsöffnung 24 freigebenden Stellung.

Weiter ist die Verschlussklappe 28 bevorzugt in Richtung auf die Verschlussstellung der Ansaugöffnung 27 vorgespannt. Bevorzugt ist hierzu eine Schenkelfeder 29 vorgesehen.

Unterseitig ist die Verschlussklappe 28 mit einem, die Ansaugöffnung 27 durchsetzenden und zumindest in den Ansaugbereich 22 hineinragenden Tastfinger 30 versehen. Dieser Tastfinger 30 erstreckt sich in der vorgespannten Grundstellung der Verschlussklappe 28, entsprechend in der Verschlussstellung der Ansaugöffnung 27, über die Anlageebene des Ansaugbereiches 22 beziehungsweise des umlaufenden Dichtwulstes 23 hinaus.

Zur Nutzung des Saugvorsatzes 12 wird der Akku-Staubsauger 1 derart an dem Saugvorsatz 12 befestigt, dass zufolge Eingriffs des Adapterabschnittes 26 in den Saugmund 5 des Staubsaugers 1 sowie zufolge Eingreifen des saugvorsatzseitigen Formschluss-Halterungsteils 15 in eine im Bereich des Handhabungsstiels 3 ausgeformte Halterungsöffnung 31 eine Formschlussverbindung zwischen Staubsauger 1 und Saugvorsatz 12 hergestellt ist. Diese Formschlussverbindung ist weiter unterstützt zufolge einer Klemmhalterung über die saugvorsatzseitigen Klemm-Halterungsausbildungen 17, welche insbesondere mit dem mittleren Bereich 8 des Staubsaugers 1 zusammenwirken.

Eine Aufhebung der Verbindung zwischen Staubsauger 1 und Saugvorsatz 12 ist hiernach nur willensbetont durch den Benutzer herbeiführbar, indem dieser den Staubsauger 1 insbesondere unter Aufhebung der Klemmhalterung von dem Saugvorsatz 12 abhebt und abzieht.

Nach Verbinden des Staubsaugers 1 mit dem Saugvorsatz 12 wird der Gebläsemotor 2 des Staubsaugers eingeschaltet. Dies erfolgt bevorzugt willensbetont durch den Benutzer, insbesondere zufolge Betätigung des Schalters 9, der in bevorzugter Ausgestaltung für den Benutzer durch die Öffnung 16 von der Ansaugbereich-Seite des Saugvorsatzes 12 zugänglich ist.

Eine alternative Ausgestaltung sieht eine automatische Aktivierung des Gebläsemotors 2 vor, sobald der Staubsauger 1 an dem Saugvorsatz 12 angesetzt wird. Hierzu kann an dem Saugvorsatz 12 beispielsweise ein Vorsprung vorgesehen sein, der gegen einen gegebenenfalls gesondert vorgesehenen Schalter des Staubsaugers 1 tritt. Bevorzugt wird diesbezüglich eine Ausgestaltung, bei welcher anstelle der Öffnung 16 ein sich dem Akku-Staubsauger in diesem Bereich entgegenwölbendes Element, beispielsweise in Form einer Negativkontur des Schalters 9, vorgesehen ist, das den Schalter 9 mit Ansetzen des Saugvorsatzes 12 an den Staubsauger 1 betätigt und somit das Sauggebläse automatisch aktiviert. Auch kann in ähnlicher Weise auf einen gegebenenfalls vorgesehenen Leistungssteller eingewirkt werden, bevorzugt derart, dass der Staubsauger 1 in der mit dem Saugvorsatz 12 gekoppelten Betriebsart automatisch in der höchsten, zur Verfügung stehenden Leistungsstufe arbeitet, dies unter entsprechender Maximierung des zur Anhaftung an der Wandfläche zur Verfügung stehenden Unterdrucks.

Weiter bevorzugt sind alternativ zu den vorbeschriebenen mechanischen Ausführungsformen zur automatischen Inbetriebnahme des Staubsaugers 1 elektronische Lösungen, beispielsweise in der Form, dass geeignete Sensoren des Staubsaugers 1 das Vorhandensein des Saugvorsatzes 12 detektieren (beispielsweise über Näherungs- oder Tastsensoren) und so entsprechend Einfluss auf die Motorsteuerung des Staubsaugers genommen wird.

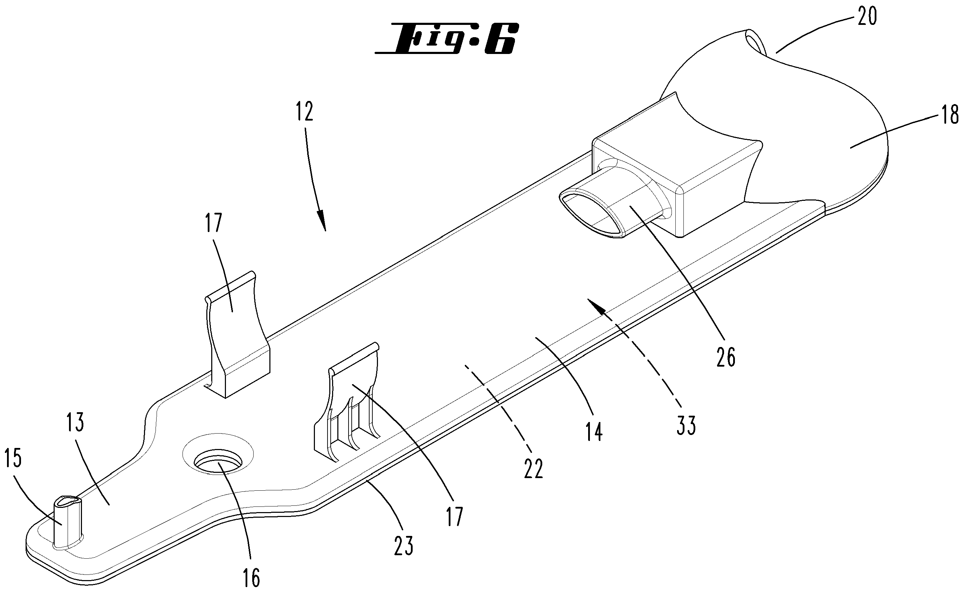

Zur Vorbereitung einer Bohrung wird der mit dem Staubsauger 1 versehene Saugvorsatz 12 bei eingeschaltetem Gebläsemotor 2 mit seinem Ansaugbereich 22 an die Fläche 11 gedrückt. Der über die Anlageebene des Ansaugbereiches 22 hervorstehende Tastfinger 30 bewirkt hierbei eine Verlagerung der Verschlussklappe 28 in eine den Saugleitungsabschnitt 25 zur Strömungsöffnung 24 bevorzugt dichtend absperrende Stellung gemäß Fig. 6. Entsprechend wirkt der über den Gebläsemotor 2 erzeugte Unterdruck in dieser Stellung allein auf den Ansaugbereich 22, so dass der Saugvorsatz 12 mit dem Staubsauger 1 an der Fläche 11 haftet.

Der Bohrer 21 wird durch die Durchgriffsöffnung 20 des Absaugvorsatzes 18 geführt. Der während des Bohrvorganges anfallende Bohrstaub sowie Bohrausbruch fällt in den schalenförmigen Absaugvorsatz 18, der entsprechend, weiter bevorzugt zusammen mit dem durch die Verschlussklappe 28 abgeriegelten Teil des Saugleitungsabschnittes 25 eine Sammelkammer 32 ausbildet.

Nach Beendigung des Bohrvorganges wird der Staubsauger 1 zusammen mit dem Saugvorsatz 12 von der Fläche 11 abgehoben, wobei zufolge fehlender Abstützung des Tastfingers 30 die Verschlussklappe 28 mittels der Schenkelfeder 29 zurück in Richtung auf die Grundstellung verlagert wird, in welcher Grundstellung der Saugleitungsabschnitt 25 zur Strömungsöffnung 24 hin geöffnet, jedoch zum Ansaugbereich 22 geschlossen ist. Die weiter vorherrschende Saugluftströmung bewirkt entsprechend ein Einsaugen des in der Sammelkammer 32 zuvor gesammelten Bohrstaubes in die bevorzugt vorgesehen Staubsammelkammer 7 des Staubsaugers 1.

Der Saugstrom wird während des Bohrens bevorzugt vollständig oder zumindest überwiegend in den Ansaugbereich 22 geleitet, so dass trotz der durch den Akkumulator begrenzten Saugleistung ein maximales Vakuum und somit die maximale Haltekraft an der Fläche 11 erzeugt werden kann. Der Bohrstaub wird in der Sammelkammer 32 zunächst lediglich aufgefangen. Nach dem Bohren wird der Bohrstaub aus der Sammelkammer 32 in den Staubsauger 1, insbesondere in dessen Staubsammelkammer 7 eingesaugt. Die Sammelkammer 32 muss entsprechend nicht separat entleert werden. Gegebenenfalls noch an der Fläche 11 haftender Bohrstaub kann abschließend mit dem von dem Saugvorsatz 12 befreiten Staubsauger 1 abgesaugt werden.

**Bezugszeichenliste:**

| | |
|---|---|
| 1 Staubsauger | 27 Ansaugöffnung |
| 2 Gebläsemotor | 28 Verschlussklappe |
| 3 Handhabungsstiel | 29 Schenkelfeder |
| 4 Saugleitungsabschnitt | 30 Tastfinger |
| 5 Saugmund | 31 Halterungsöffnung |
| 6 Gehäuse | 32 Sammelkammer |
| 7 Staubsammelkammer | 33 Haft-Saugkammer |
| 8 Mittlerer Bereich | b Breite |
| 9 Schalter | x Achse |
| 10 Akkumulator | y Längsmittelachse |
| 11 Fläche | z Schwenkachse |
| 12 Saugvorsatz | |
| 13 Bereich | |
| 14 Oberfläche | |
| 15 Formschluss-Halterungsteil | |
| 16 Öffnung | |
| 17 Klemm-Halterungsausbildung | |
| 18 Bohrstaub-Absaugvorsatz | |
| 19 Saugmund | |
| 20 Durchgriffsöffnung | |
| 21 Bohrer | |
| 22 Ansaugbereich | |
| 23 Dichtungswulst | |
| 24 Strömungsöffnung | |
| 25 Saugleitungsabschnitt | |
| 26 Adapterabschnitt | |

## Patentansprüche

1. Saugvorsatz (12) für einen Staubsauger (1), wobei der Saugvorsatz (12) einen Saugmund (19) mit einer Durchgriffsöffnung (20) für einen Bohrer (21), einen von dem Saugmund (19) gesonderten Ansaugbereich (22) zur Saugbefestigung an einer Fläche (11), bspw. einer Wandfläche, aufweist und der Saugmund (19) von einem, von dem Staubsauger (1) erzeugten Unterdruck abkoppelbar ist, **dadurch gekennzeichnet, dass** sich bei einer Saugbefestigung an einer Fläche (11) selbsttätig die Abkopplung des Saugmundes (19) ergibt.

2. Saugvorsatz nach Anspruch 1, **dadurch gekennzeichnet, dass** die Abkopplung durch eine zwischen einer Abkopplungsstellung und einer Zuschaltstellung verschwenkbare Verschlussklappe (28) in einem Saugleitungsabschnitt (25) gegeben ist.

3. Saugvorsatz nach Anspruch 2, **dadurch gekennzeichnet, dass** die Verschlussklappe (28) in die Zuschaltstellung vorgespannt ist.

4. Saugvorsatz nach einem der Ansprüche 2 oder 3, **dadurch gekennzeichnet, dass** der Saugmund (19) eine zu dem Saugleitungsabschnitt (25) führende Strömungsöffnung (24) aufweist, wobei sich an die Strömungsöffnung (24) zunächst eine im Hinblick auf einen sich an die Strömungsöffnung (24) in Strömungsrichtung anschließenden Adapterabschnitt (26) zur Zusammenwirkung mit einem Saugleitungsabschnitt (4) des Staubsaugers (1) eine gegenüber dem Adapterabschnitt (26) querschnittsvergrößerte Sammelkammer (32) anschließt.

5. Saugvorsatz nach Anspruch 4, **dadurch gekennzeichnet, dass** die Verschlussklappe (28) in der Sammelkammer (32) angeordnet ist.

6. Saugvorsatz nach einem der vorhergehenden Ansprüche, **dadurch gekennzeichnet, dass** der Saugmund (19) mit dem Ansaugbereich (22) einteilig ausgebildet ist

7. Saugvorsatz nach einem der vorhergehenden Ansprüche, **dadurch gekennzeichnet, dass** der Ansaugbereich (22) als langgestrecktes Flächenteil ausgebildet ist, das jedenfalls die Breite des damit zu verbindenden Staubsaugers (1) übertrifft.

8. Saugvorsatz nach einem der vorhergehenden Ansprüche, **dadurch gekennzeichnet, dass** an dem Saugvorsatz (12) ein Formschluss-Halterungsteil (15) ausgebildet ist, zum Eingriff in eine Halterungsöffnung (31) des Staubsaugers (1).

9. Staubsauger (1) mit einem Saugvorsatz (12) nach einem der Ansprüche 1 bis 8, **dadurch gekennzeichnet, dass** der langgestreckt ausgebildete Staubsauger (1) an seinem einen Endbereich eine Saugleitungsmündung aufweist und an dem anderen Ende einen gegenüber dem mittleren Bereich (8) verjüngten Handhabungsstiel (3).

10. Staubsauger nach Anspruch 9, **dadurch gekennzeichnet, dass** der Handhabungsstiel (3) eine Formschluss-Halterungsöffnung (31) aufweist.

11. Staubsauger nach einem der Ansprüche 9 oder 10, **dadurch gekennzeichnet, dass** der Saugvorsatz (12) eine Klemm-Halterungsausbildung (17) zur Klemmhalterung des Staubsaugers (1) aufweist.

12. Staubsauger nach Anspruch 11, **dadurch gekennzeichnet, dass** die Klemm-Halterungsausbildung (17) einem Bereich zwischen Saugleitungsmündung und Formschluss-Halterungsöffnung (31) des Staubsaugers (1) zuordbar ist.

## Claims

1. Suction attachment (12) for a vacuum cleaner (1), the suction attachment (12) comprising a suction mouth (19) which has a through opening (20) for a drill (21), and a suction region (22), which is separate from the suction mouth (19), for attachment by means of suction to a surface (11), for example a wall surface, and it being possible to uncouple the suction mouth (19) from a vacuum generated by the vacuum cleaner (1), **characterised in that** when attached to a surface (11) by means of suction, the suction mouth (19) is automatically uncoupled.

2. Suction attachment according to claim 1, **characterised in that** the uncoupling is performed by a closure flap (28) in a suction line portion (25), which flap can be pivoted between an uncoupling position and an engaged position.

3. Suction attachment according to claim 2, **characterised in that** the closure flap (28) is preloaded into the engaged position.

4. Suction attachment according to either claim 2 or claim 3, **characterised in that** the suction mouth (19) comprises a flow opening (24) that leads to the suction line portion (25), firstly a, with respect to an adapter portion (26) connected to the flow opening (24) in the flow direction, a collection chamber (32), the cross section of which is enlarged compared with the adapter portion (26), being connected to the flow opening (24) in order to interact with a suction line portion (4) of the vacuum cleaner (1).

5. Suction attachment according to claim 4, **characterised in that** the closure flap (28) is arranged in the collection chamber (32).

6. Suction attachment according to any of the preceding claims, **characterised in that** the suction mouth (19) is formed in one piece with the suction region (22).

7. Suction attachment according to any of the preceding claims, **characterised in that** the suction region (22) is in the form of an elongate planar part which exceeds at least the width of the vacuum cleaner (1) to be connected thereto.

8. Suction attachment according to any of the preceding claims, **characterised in that** a form-fitting retainer part (15) is formed on the suction attachment (12) for engagement in a retainer opening (31) of the vacuum cleaner (1).

9. Vacuum cleaner (1) comprising a suction attachment (12) according to any of claims 1 to 8, **characterised in that** the elongate vacuum cleaner (1) comprises a suction line port on one end region and comprises an operating handle (3) on the other end, which handle is tapered with respect to the central region (8).

10. Vacuum cleaner according to claim 9, **characterised in that** the operating handle (3) comprises a form-fitting retainer opening (31).

11. Vacuum cleaner according to either claim 9 or claim 10, **characterised in that** the suction attachment (12) comprises a clamping-retainer formation (17) for clampingly retaining the vacuum cleaner (1).

12. Vacuum cleaner according to claim 11, **characterised in that** the clamping-retainer formation (17) can be allocated to a region between the suction line port and the form-fitting retainer opening (31) of the vacuum cleaner (1).

## Revendications

1. Embout d'aspiration (12) pour un aspirateur (1), dans lequel l'embout d'aspiration (12) comprend une bouche d'aspiration (19) avec une ouverture de passage (20) pour un foret (21), une zone d'aspiration (22) séparée de la bouche d'aspiration (19) pour la fixation par aspiration sur une surface (11), par exemple une surface murale, et la bouche d'aspiration (19) peut être découplé d'une dépression générée par l'aspirateur (1), **caractérisé en ce que** le découplage de la bouche d'aspiration (19) se produit automatiquement lors d'une fixation par aspiration sur une surface (11).

2. Embout d'aspiration selon la revendication 1, **caractérisé en ce que** le découplage est réalisé par un clapet de fermeture (28) dans une section de conduite d'aspiration (25) qui peut pivoter entre une position de découplage et une position de couplage.

3. Embout d'aspiration selon la revendication 2, **caractérisé en ce que** le clapet de fermeture (28) est précontraint en position de couplage.

4. Embout d'aspiration selon l'une des revendications 2 ou 3, **caractérisé en ce que** la bouche d'aspiration (19) présente une ouverture de passage de fluide (24) menant à la section de conduite d'aspiration (25), dans lequel, par rapport à une section d'adaptateur (26) se rattachant à l'ouverture de passage d'air (24) dans la direction de circulation d'air et qui est prévue pour coopérer avec une section de conduite d'aspiration (4) de l'aspirateur (1), l'ouverture de passage d'air (24) se rattache en premier lieu à une chambre de collecte (32) ayant une section agrandie par rapport à la section d'adaptateur (26).

5. Embout d'aspiration selon la revendication 4, **caractérisé en ce que** le clapet de fermeture (28) est disposé dans la chambre de collecte (32).

6. Embout d'aspiration selon l'une des revendications précédentes, **caractérisé en ce que** la bouche d'aspiration (19) est formée d'une seule pièce avec la zone d'aspiration (22).

7. Embout d'aspiration selon l'une des revendications précédentes, **caractérisé en ce que** la zone d'aspiration (22) est réalisée sous la forme d'une partie de surface allongée qui dépasse dans tous les cas la largeur de l'aspirateur (1) à y lier.

8. Embout d'aspiration selon l'une des revendications précédentes, **caractérisé en ce qu'**une partie de retenue (15) à verrouillage de forme est formée sur l'embout d'aspiration (12) pour engagement dans une ouverture de retenue (31) de l'aspirateur (1).

9. Aspirateur (1) comportant un embout d'aspiration (12) selon l'une des revendications 1 à 8, **caractérisé en ce que** l'aspirateur (1) réalisé allongé présente une ouverture de conduite d'aspiration dans une zone d'extrémité et, à l'autre extrémité, un manche de manipulation (3) rétrécie par rapport à la zone centrale (8).

10. Aspirateur selon la revendication 9, **caractérisé en ce que** le manche de manipulation (3) présente une ouverture de retenue par verrouillage de forme (31).

11. Aspirateur selon l'une des revendications 9 ou 10, **caractérisé en ce que** l'embout d'aspiration (12) présente une partie de maintien par serrage (17) pour le maintien par serrage de l'aspirateur (1).

12. Aspirateur selon la revendication 11, **caractérisé en ce que** la partie de maintien par serrage (17) peut être associée à une zone située entre l'ouverture de la conduite d'aspiration et l'ouverture de retenue par verrouillage de forme (31) de l'aspirateur (1).
